# EUROPEAN PATENT APPLICATION

(11) **EP 4 707 145 A1**
(43) Date of publication of application: **11.03.2026**
(21) Application number: 23954292.1
(22) Date of filing: 28.09.2023
(51) Int. Cl.: B62K 21/00

(54) **STRADDLED VEHICLE WITH EPS**

(71) Applicant: Yamaha Hatsudoki Kabushiki Kaisha, Iwata-shi, Shizuoka 438-8501 (JP)
(72) Inventor: HOSOI, Takayuki, Iwata-shi, Shizuoka 438-8501 (JP); ARAI, Takeshi, Iwata-shi, Shizuoka 438-8501 (JP); HARA, Nobuo, Iwata-shi, Shizuoka 438-8501 (JP)
(74) Representative: Stöckeler, Ferdinand
(86) International application number: PCT/JP2023/035449
(87) International publication number: WO 2025/069320

(57) **Abstract**

The present teaching aims to provide a straddled vehicle equipped with an EPS, capable of compact arrangement of an EPS actuator, with suppression of a change of a power transmission condition of the EPS actuator transmitting power to a steering shaft, the change being otherwise caused by a dynamic thrust load. A motor included in the EPS actuator is configured such that the sum of a maximum compression amount of an upward dynamic thrust load attenuation elastomer member, which is less than the height of an upward movement allowance space for allowing a rotor shaft to move in the upward direction when a dynamic thrust load in the upward direction is received, and a maximum compression amount of a downward dynamic thrust load attenuation elastomer member, which is less than the height of a downward movement allowance space for allowing the rotor shaft to move in the downward direction when a dynamic thrust load in the downward direction is received, can be shorter than the length in the up-down direction of a gear part having a longer length in the up-down direction out of a rotor gear part and a transmission gear part meshed with the rotor gear part.

## Description

### Technical Field

The present teaching relates to a straddled vehicle, and more specifically relates to a straddled vehicle equipped with an electric power steering (hereinafter referred to as EPS).

### Background Art

Straddled vehicles are conventionally known. These straddled vehicles include a straddled vehicle equipped with an EPS. The straddled vehicle equipped with the EPS includes an EPS actuator configured to apply an auxiliary steering force corresponding to a rider's manipulation of handlebar to a front steerable wheel. A straddled vehicle of this type is disclosed in PTL 1, for example.

### Citation List

### Patent Literature

PTL 1: International Publication No. WO2017/200095

### Summary of Invention

### Technical Problem

In a straddled vehicle equipped with an EPS, from the viewpoint of compact arrangement of an EPS actuator, the EPS actuator is arranged such that a rotor shaft of a motor included in the EPS actuator extends in the up-down direction of the vehicle. Here, when the straddled vehicle equipped with the EPS travels, a dynamic thrust load in the up-down direction is applied to the motor. That is, the dynamic thrust load in traveling is applied in the direction in which the rotor shaft extends. Accordingly, the rotor shaft moves in the up-down direction (i.e., the axial direction). The position at which a rotor gear part is meshed with a transmission gear part, which is meshable with the rotor gear part, changes. A wear condition of the rotor gear part and the transmission gear part may vary depending on the position of meshing of these gear parts. As the rotor shaft moves, a power transmission condition in which the EPS actuator transmits power to a steering shaft may change. In addition, to enhance the durability of a component that receives the dynamic thrust load, the size of the component may be increased.

The present teaching aims to provide a straddled vehicle equipped with an EPS, capable of compact arrangement of an EPS actuator, with suppression of a change of a power transmission condition of the EPS actuator transmitting power to a steering shaft, the change being otherwise caused by a dynamic thrust load.

### Solution to the Problem

The inventors of the present teaching conducted studies about measures to attain the aim, and consequently gained the findings that it is effective to attenuate a dynamic thrust load in traveling, which is applied to a motor, by making the dynamic thrust load received by both of upper and lower dynamic thrust load attenuation elastomer members. Based on these findings, the present teaching was accomplished.
(1) A straddled vehicle equipped with an EPS according to an embodiment of the present teaching includes:
   a front steerable wheel;
   a steering mechanism including a handlebar and a steering shaft, the handlebar being manipulated by a rider, the steering shaft extending in the up-down direction of the straddled vehicle, the steering mechanism being configured such that a rider's manipulation of the handlebar is mechanically transmitted to steer the front steerable wheel; and
   an EPS actuator configured to apply an auxiliary steering force corresponding to a rider's manipulation of the handlebar to the front steerable wheel,
   the EPS actuator including
      a motor, and
      at least one transmission gear part configured to transmit an output of the motor to the steering shaft,
   the motor including
      a rotor shaft arranged rotatably about an axis line extending in the up-down direction of the straddled vehicle,
      a rotor gear part provided to the rotor shaft, the rotor gear part being meshed with one transmission gear part out of the at least one transmission gear part such that a tooth space of the rotor gear part and a tooth space of the one transmission gear part extend in the up-down direction,
      an upward dynamic thrust load attenuation elastomer member disposed so as to allow the rotor shaft to move in the upward direction of the straddled vehicle, and to receive and attenuate a dynamic thrust load that is applied in the upward direction, the dynamic thrust load being produced as the straddled vehicle travels, and
      a downward dynamic thrust load attenuation elastomer member disposed so as to allow the rotor shaft to move in the downward direction of the straddled vehicle, and to receive and attenuate a dynamic thrust load that is applied in the downward direction, the dynamic thrust load being produced as the straddled vehicle travels,
   the motor being configured such that the upward dynamic thrust load attenuation elastomer member is compressed in the upward direction by receiving a dynamic thrust load that is applied in the upward direction of the straddled vehicle, the dynamic thrust load being produced as the straddled vehicle travels, so that the thrust load is attenuated, and also configured such that a maximum compression amount of the upward dynamic thrust load attenuation elastomer member at a time of receiving the thrust load is less than a height of an upward movement allowance space, the upward movement allowance space being provided so as to allow the rotor shaft to move in the upward direction when the thrust load is received,
   the motor being configured such that the downward dynamic thrust load attenuation elastomer member is compressed in the downward direction by receiving a dynamic thrust load that is applied in the downward direction of the straddled vehicle, the dynamic thrust load being produced as the straddled vehicle travels, so that the thrust load is attenuated, and also configured such that a maximum compression amount of the downward dynamic thrust load attenuation elastomer member at a time of receiving the thrust load is less than a height of a downward movement allowance space, the downward movement allowance space being provided so as to allow the rotor shaft to move in the downward direction when the thrust load is received,
   the motor being configured such that the sum of the maximum compression amount of the upward dynamic thrust load attenuation elastomer member and the maximum compression amount of the downward dynamic thrust load attenuation elastomer member is shorter than a length in the up-down direction of a gear part having a longer length in the up-down direction among both the rotor gear part and the transmission gear part meshed with the rotor gear part.

In the straddled vehicle equipped with the EPS of (1), the motor included in the EPS actuator is configured such that: the upward dynamic thrust load attenuation elastomer member is compressed in the upward direction by receiving a dynamic thrust load that is applied in the upward direction of the straddled vehicle, the dynamic thrust load being produced as the straddled vehicle travels, so that the thrust load is attenuated, and the maximum compression amount of the upward dynamic thrust load attenuation elastomer member at a time of receiving the thrust load is less than the height of an upward movement allowance space, the upward movement allowance space being provided so as to allow the rotor shaft to move in the upward direction when the thrust load is received; the downward dynamic thrust load attenuation elastomer member is compressed in the downward direction by receiving a dynamic thrust load that is applied in the downward direction of the straddled vehicle, the dynamic thrust load being produced as the straddled vehicle travels, so that the thrust load is attenuated, and the maximum compression amount of the downward dynamic thrust load attenuation elastomer member at a time of receiving the thrust load is less than the height of a downward movement allowance space, the downward movement allowance space being provided so as to allow the rotor shaft to move in the downward direction when the thrust load is received; and the sum of the maximum compression amount of the upward dynamic thrust load attenuation elastomer member and the maximum compression amount of the downward dynamic thrust load attenuation elastomer member is shorter than a length in the up-down direction of a gear part having a longer length in the up-down direction among both the rotor gear part and the transmission gear part meshed with the rotor gear part.

Compact arrangement of the EPS actuator can be achieved with suppression of a change of a power transmission condition of the EPS actuator transmitting power to the steering shaft, the change being otherwise caused by a dynamic thrust load.

In more detail, the EPS actuator is disposed such that the rotor shaft of the motor included in the EPS actuator extends in the up-down direction of the straddled vehicle. This makes compact arrangement of the EPS actuator possible.

Here, a dynamic thrust load, which is produced as the straddled vehicle travels, is applied to the motor in the up-down direction of the straddled vehicle, that is, in the direction in which the rotor shaft of the motor extends. Accordingly, the rotor shaft moves in the up-down direction (i.e., in the axial direction of the rotor shaft).

The sum of the maximum compression amount of the upward dynamic thrust load attenuation elastomer member and the maximum compression amount of the downward dynamic thrust load attenuation elastomer member is shorter than the length, in the up-down direction, of the gear part having a longer length in the up-down direction among both the rotor gear part and the transmission gear part, which is meshed with the rotor gear part. Regardless of whether the dynamic thrust load is applied upward or downward, the rotor gear part and the transmission gear part can be kept meshed with each other.

When a dynamic thrust load in the upward direction is applied to the motor, the upward dynamic thrust load attenuation elastomer member is compressed by receiving the thrust load, so that the thrust load is attenuated. Here, the maximum compression amount at a time of receiving the thrust load is less than the height of the upward movement allowance space. It is possible for the thrust load to be attenuated effectively.

When a dynamic thrust load in the downward direction is applied to the motor, the downward dynamic thrust load attenuation elastomer member is compressed by receiving the thrust load, so that the thrust load is attenuated. Here, the maximum compression amount at a time of receiving the thrust load is less than the height of the downward movement allowance space. It is possible for the thrust load to be attenuated effectively.

After the compressed state of the upward dynamic thrust load attenuation elastomer member or the compressed state of the downward dynamic thrust load attenuation elastomer member is relieved, the position at which the rotor gear part is meshed with the transmission gear part can be returned to the position before the application of the dynamic thrust load (that is, to the original position), or to substantially the same position as the original position. It is possible for a change of the position at which the rotor gear part is meshed with the transmission gear part, which is configured to be meshed with the rotor gear part, to be suppressed. It is possible for a variation in the wear condition of the rotor gear part and the transmission gear part depending on the position at which the gear parts are meshed with each other to be suppressed. It is possible for a change of the power transmission condition of the EPS actuator, transmitting power to the steering shaft, to be suppressed.

In addition, since the upward dynamic thrust load attenuation elastomer member and the downward dynamic thrust load attenuation elastomer member described above are provided, a size increase of a component that receives a dynamic thrust load for the purpose of enhancing the durability of the component can be suppressed. This makes compact arrangement of the EPS actuator possible.

The straddled vehicle is one having a saddle-type seat, for example. The straddled vehicle is one of a type on which a rider sits astride a saddle, for example. Examples of the straddled vehicle include scooters, mopeds, snowmobiles, watercrafts, all-terrain vehicles (ATVs), and the like. The straddled vehicle includes at least one front wheel and at least one rear wheel, for example. That is, the straddled vehicle is not limited to a two-wheeled vehicle, but may be a three-wheeled vehicle of which a front wheel or rear wheel is composed of a pair of left and right wheels, or a four-wheeled vehicle of which a front wheel and rear wheel are each composed of a pair of left and right wheels. The straddled vehicle may be a leaning vehicle, for example. The leaning vehicle is one having a vehicle body configured to lean in the vehicle left direction when turning left, and lean in the vehicle right direction when turning right. The straddled vehicle includes a power source, for example. The power source is an engine, an electric motor, or a combination of an engine and an electric motor, for example.

The handlebar is, for example, a single handlebar continuously extending in the left-right direction of the straddled vehicle. The handlebar, for example, may include a left handlebar and a right handlebar disposed apart from each other in the left-right direction of the straddled vehicle.

The configuration "extending in the up-down direction of the straddled vehicle" encompasses extending with an inclination in the forward-rearward direction of the straddled vehicle while the vehicle body of the straddled vehicle stands upright, for example.

The configuration "a rider's manipulation of the handlebar is mechanically transmitted to steer the front steerable wheel" encompasses a configuration in which, for example, the EPS actuator is disposed on a path through which a force is transmitted from the handlebar to the front steerable wheel, the rider manipulates the handlebar so that the EPS actuator outputs an auxiliary steering force, and the auxiliary steering force is transmitted to the front steerable wheel, and the front steerable wheel is steered. The EPS actuator is disposed on the path through which a force is transmitted from the handlebar to the front steerable wheel such that the rider's manipulation of the handlebar can be transmitted to the front steerable wheel even when the EPS actuator is not operating, for example.

The auxiliary steering force assists the front steerable wheel in being steered in the direction in which the rider has manipulated the handlebar, for example. In other words, the auxiliary steering force makes it easy for the front steerable wheel to be steered in the direction in which the rider has manipulated the handlebar. The auxiliary steering force may be a force that hinders the front steerable wheel from being steered in the direction in which the rider has manipulated the handlebar, for example. In other words, the auxiliary steering force may be a force that makes it difficult for the front steerable wheel to be steered in the direction in which the rider has manipulated the handlebar.

The at least one transmission gear part may be a gear part (hereinafter, also referred to as gear part (A)) formed on an outer circumference of the steering shaft itself, or may simply be a gear (hereinafter, also referred to as gear (B)) provided to the steering shaft itself so as to be coaxial with the steering shaft, for example. The at least one transmission gear part includes the gear part (A) or the gear (B), for example. The at least one transmission gear part includes at least one gear in addition to the gear part (A) or the gear (B), the at least one gear being configured to transmit an output of the motor to the gear part (A) or to the gear (B), for example. The EPS actuator includes a housing, for example. The housing accommodates the motor and the at least one transmission gear part. The gear part (A) or the gear (B) is the at least one transmission gear part, as long as it is accommodated in the housing of the EPS actuator.

The "rotor gear part meshed with the transmission gear part such that a tooth space of the rotor gear part and a tooth space of the transmission gear part extend in the up-down direction" means that, for example, each tooth of the transmission gear part and each tooth of the rotor gear part meshed with the transmission gear part are spur teeth or helical teeth.

The rotor gear part is one formed on the rotor shaft itself, or is a gear provided to the rotor shaft itself so as to be coaxial with the rotor shaft, for example.

The dynamic thrust load is received from the road surface when the straddled vehicle travels, for example. The dynamic thrust load is received when the straddled vehicle passes through irregularities on the road surface, for example. The dynamic thrust load is temporarily received as the straddled vehicle travels, for example. The dynamic thrust load is not received continuously at a constant extent, for example.

The upward dynamic thrust load attenuation elastomer member is configured to be compressed in the upward direction upon receiving a dynamic thrust load in the upward direction and then restore its original shape if the thrust load is no longer received, for example. The upward dynamic thrust load attenuation elastomer member is arranged such that its bulging deformation in a direction (horizontal direction) perpendicular to the upward direction is allowed when it is compressed in the upward direction upon receiving a dynamic thrust load in the upward direction, for example.

The downward dynamic thrust load attenuation elastomer member is configured to be compressed in the downward direction upon receiving a dynamic thrust load in the downward direction and then restore its original shape if the thrust load is no longer received, for example. The downward dynamic thrust load attenuation elastomer member is arranged such that its bulging deformation in a direction (horizontal direction) perpendicular to the downward direction is allowed when it is compressed in the downward direction upon receiving a dynamic thrust load in the downward direction, for example.

The upward dynamic thrust load attenuation elastomer member and the downward dynamic thrust load attenuation elastomer member are made of the same material, or made of different materials, for example. The upward dynamic thrust load attenuation elastomer member and the downward dynamic thrust load attenuation elastomer member are made of an elastomer, for example. The upward dynamic thrust load attenuation elastomer member and the downward dynamic thrust load attenuation elastomer member are made of a rubber, for example.

The upward dynamic thrust load attenuation elastomer member and the downward dynamic thrust load attenuation elastomer member have the same shape, or different shapes, for example. The upward dynamic thrust load attenuation elastomer member and the downward dynamic thrust load attenuation elastomer member are formed in annular shapes, for example. The upward dynamic thrust load attenuation elastomer member and the downward dynamic thrust load attenuation elastomer member are formed in annular shapes, and have circular cross-sections, for example. The upward dynamic thrust load attenuation elastomer member and the downward dynamic thrust load attenuation elastomer member have ring shapes, for example.

The maximum compression amount of the upward dynamic thrust load attenuation elastomer member is set by changing, as appropriate, the material, shape, and the like, such that the maximum compression amount at a time of receiving a dynamic thrust load that is applied in the upward direction is less than the height of the upward movement allowance space, for example.

The maximum compression amount of the downward dynamic thrust load attenuation elastomer member is set by changing, as appropriate, the material, shape, and the like, such that the maximum compression amount at a time of receiving a dynamic thrust load that is applied in the downward direction is less than the height of the downward movement allowance space, for example.

In such a case, the maximum compression amount of the upward dynamic thrust load attenuation elastomer member and the maximum compression amount of the downward dynamic thrust load attenuation elastomer member are set by changing the material, shape, and the like, of the upward dynamic thrust load attenuation elastomer member and the downward dynamic thrust load attenuation elastomer member such that the maximum compression amount of the upward dynamic thrust load attenuation elastomer member at a time of receiving a dynamic thrust load that is applied in the upward direction and the maximum compression amount of the downward dynamic thrust load attenuation elastomer member at a time of receiving a dynamic thrust load that is applied in the downward direction is less than the length in the up-down direction of a gear part having a longer length in the up-down direction among both the rotor gear part and the transmission gear part meshed with the rotor gear part.

Here, for example, in a case where the rotor gear part has a longer length in the up-down direction than the transmission gear part, the length of the rotor gear part in the up-down direction corresponds to the "length in the up-down direction of a gear part having a longer length in the up-down direction among both the rotor gear part and the transmission gear part meshed with the rotor gear part," and in a case where the transmission gear part has a longer length in the up-down direction than the rotor gear part, the length of the transmission gear part in the up-down direction corresponds to the "length in the up-down direction of a gear part having a longer length in the up-down direction among both the rotor gear part and the transmission gear part meshed with the rotor gear part."

The rotor gear part and the transmission gear part are configured such that a shorter gear part (second gear part), different from a longer gear part (first gear part) having a longer length in the up-down direction among both the rotor gear part and the transmission gear part, is meshed with the longer gear part throughout the length of the shorter gear part in the up-down direction, both; in a case where the rotor gear part is moved relative to the transmission gear part by the maximum compression amount of the upward dynamic thrust load attenuation elastomer member at a time of receiving a dynamic thrust load that is applied in the upward direction, and
in a case where the rotor gear part is moved relative to the transmission gear part by the maximum compression amount of the downward dynamic thrust load attenuation elastomer member at a time of receiving a dynamic thrust load that is applied in the downward direction, for example.

In an aspect of the present teaching, the straddled vehicle equipped with the EPS may adopt the following configuration.
(2) In the straddled vehicle equipped with the EPS of (1),
the rotor gear part and the transmission gear part are each a gear having spur teeth or helical teeth.

In the straddled vehicle equipped with the EPS of (2), the rotor gear part and the transmission gear part are meshed with each other such that their tooth spaces extend in the up-down direction. Accordingly, the rotor gear part can easily move in the up-down direction relative to the transmission gear part. Especially in a case where each of the rotor gear part and the transmission gear part is a spur teeth gear, the rotor gear part can move even more easily in the up-down direction relative to the transmission gear part. The attenuation of a dynamic thrust load, which is exerted by compression of each dynamic thrust load attenuation elastomer member in response to reception of the dynamic thrust load, is obtained more effectively. It is possible to effectively attenuate a received dynamic thrust load while achieving compact arrangement of the EPS actuator. A situation where the power transmission condition of the EPS actuator transmitting power to the steering shaft is changed due to the dynamic thrust load can be suppressed.

In an aspect of the present teaching, the straddled vehicle equipped with the EPS may adopt the following configuration.
(3) The straddled vehicle equipped with the EPS according to (1) or (2) further includes
a front fork configured to, when a dynamic thrust load in traveling is received from a road surface, expand and contract in a direction in which the axis line of the rotor shaft extends, so that the dynamic thrust load in traveling received from the road surface is attenuated.

The straddled vehicle equipped with the EPS of (3) is configured such that when a dynamic thrust load in traveling is received from the road surface, the front fork expands and contracts in the direction in which the axis line of the rotor shaft extends, so that the dynamic thrust load in traveling received from the road surface is attenuated. The amount of movement of the rotor shaft when the dynamic thrust load is received can be reduced. The height of each of the upward movement allowance space and the downward movement allowance space can be suppressed. A situation where the power transmission condition of the EPS actuator transmitting power to the steering shaft is changed due to the dynamic thrust load can be suppressed, along with achievement of compact arrangement of the EPS actuator.

In an aspect of the present teaching, the straddled vehicle equipped with the EPS may adopt the following configuration.
(4) In the straddled vehicle equipped with the EPS of any one of (1) to (3),
the downward dynamic thrust load attenuation elastomer member has an annular shape, and
the downward movement allowance space is formed inside the downward dynamic thrust load attenuation elastomer member.

In the straddled vehicle equipped with the EPS of (4), a space inside the downward dynamic thrust load attenuation elastomer member can be used to allow compression deformation of the downward dynamic thrust load attenuation elastomer member and movement of the rotor shaft. The arrangement space for the downward dynamic thrust load attenuation elastomer member can be used to form the downward movement allowance space. This allows compact arrangement of the EPS actuator.

These and other objects, features, aspects, and advantages of the present teaching will become more apparent from the following detailed description of embodiment(s) of the present teaching, with reference to the accompanying drawings. As used herein, the term "and/or" includes any and all combinations of one or more of the associated listed items. As used herein, the terms "including," "comprising," or "having," and variations thereof specify the presence of stated features, steps, operations, elements, components, and/or equivalents thereof, and can include one or more of steps, operations, elements, components, and/or their groups. Unless otherwise defined, all terms (including technical and scientific terms) used herein have the same meaning as commonly understood by one of ordinary skill in the art to which the present teaching belongs. It will be further understood that terms, such as those defined in commonly used dictionaries, should be interpreted as having a meaning that is consistent with their meaning in the context of the present disclosure and relevant art and should not be interpreted in an idealized or overly formal sense unless expressly so defined herein. It will be understood that the description of the present teaching discloses a number of techniques and steps. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, Description and Claims should be read with the understanding that such combinations are entirely within the scope of the present teaching and the claims. In the description given below, for the purposes of explanation, numerous specific details are set forth in order to provide a thorough understanding of the present teaching. It will be apparent, however, that those skilled in the art may practice the present teaching without these specific details. The present disclosure is to be considered as an exemplification of the present teaching, and is not intended to limit the present teaching to the specific embodiments illustrated by the drawings or descriptions provided below.

### Advantageous Effects of Invention

The present teaching is capable of compact arrangement of an EPS actuator, along with suppression of a change of a power transmission condition of the EPS actuator transmitting power to a steering shaft, the change being otherwise caused by a dynamic thrust load.

### Brief Description of Drawings

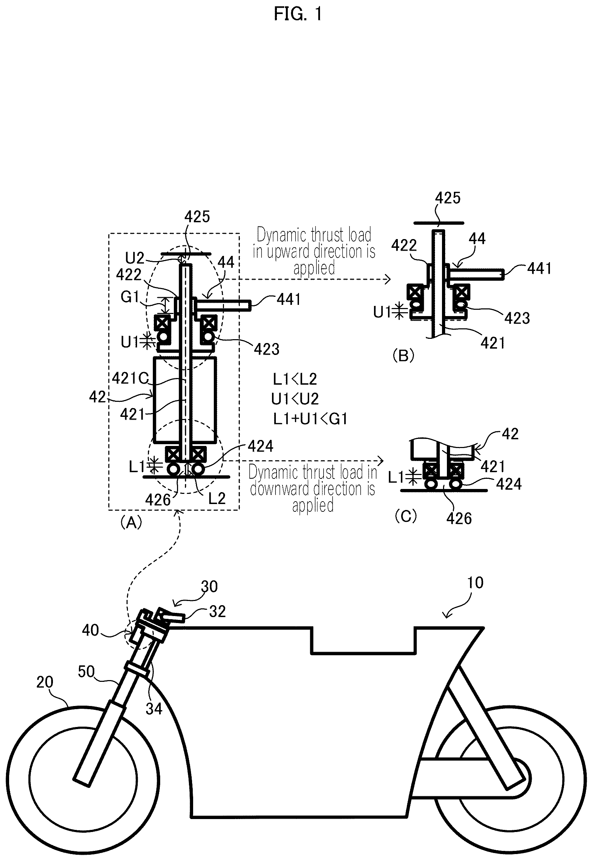

[FIG. 1] A conceptual diagram showing a configuration of a straddled vehicle equipped with an EPS according to an embodiment of the present teaching

### Description of Embodiments

In the following, details of a straddled vehicle equipped with an EPS according to an embodiment of the present teaching will be described with reference to the drawings. Here, it should be noted that the embodiment described below is merely an example. The present teaching should not be construed as being limited in any way by the embodiment described below.

Referring to FIG. 1, a straddled vehicle 10 equipped with an EPS (hereinafter, sometimes referred to simply as straddled vehicle 10) according to an embodiment of the present teaching will be described. The straddled vehicle 10 equipped with the EPS includes a front steerable wheel 20, a steering mechanism 30, and an EPS actuator 40.

The steering mechanism 30 includes handlebar 32, which is manipulated by a rider, and a steering shaft 34, which extends in up-down direction of the straddled vehicle 10. The steering mechanism 30 is configured such that a rider's manipulation of the handlebar 32 is mechanically transmitted to steer the front steerable wheel 20.

The EPS actuator 40 is configured to apply an auxiliary steering force corresponding to the rider's manipulation of the handlebar 32 to the front steerable wheel 20. As shown in (A), the EPS actuator 40 includes a motor 42 and at least one transmission gear part 44, which transmits an output of the motor 42 to the steering shaft 34. (A) is a diagram schematically showing a configuration of the EPS actuator 40.

The motor 42 includes a rotor shaft 421, a rotor gear part 422, an upward dynamic thrust load attenuation elastomer member 423, and a downward dynamic thrust load attenuation elastomer member 424. The rotor shaft 421 is arranged rotatably about an axis line 421C, which extends in the up-down direction of the straddled vehicle 10. The rotor gear part 422, which is provided to the rotor shaft 421, is meshed with one transmission gear part 441 out of at least one transmission gear part 44 such that a tooth space of the rotor gear part 422 and a tooth space of the one transmission gear part 441 extend in the up-down direction. The upward dynamic thrust load attenuation elastomer member 423 is disposed so as to allow the rotor shaft 421 to move in upward direction of the straddled vehicle 10, and to receive and attenuate a dynamic thrust load that is applied in the upward direction, the dynamic thrust load being produced as the straddled vehicle 10 travels. The downward dynamic thrust load attenuation elastomer member 424 is disposed so as to allow the rotor shaft 421 to move in downward direction of the straddled vehicle 10, and to receive and attenuate a dynamic thrust load that is applied in the downward direction, the dynamic thrust load being produced as the straddled vehicle 10 travels.

The motor 42 is configured such that the upward dynamic thrust load attenuation elastomer member 423 is compressed in the upward direction (see (B)) by receiving a dynamic thrust load that is applied in the upward direction of the straddled vehicle 10, the dynamic thrust load being produced as the straddled vehicle 10 travels, so that the thrust load is attenuated, and also configured such that its maximum compression amount U1 at a time of receiving the thrust load is less than a height U2 of an upward movement allowance space 425, which is provided so as to allow the rotor shaft 421 to move in the upward direction when the thrust load is received. Here, it should be noted that (B) shows a case where a compression amount of the upward dynamic thrust load attenuation elastomer member 423 is the maximum compression amount U1.

The motor 42 is configured such that the downward dynamic thrust load attenuation elastomer member 424 is compressed in the downward direction (see (C)) by receiving a dynamic thrust load that is applied in the downward direction of the straddled vehicle 10, the dynamic thrust load being produced as the straddled vehicle 10 travels, so that the thrust load is attenuated, and also configured such that its maximum compression amount L1 at a time of receiving the thrust load is less than a height L2 of a downward movement allowance space 426, which is provided so as to allow the rotor shaft 421 to move in the downward direction when the thrust load is received. Here, it should be noted that (C) shows a case where a compression amount of the downward dynamic thrust load attenuation elastomer member 424 is the maximum compression amount L1.

The motor 42 is configured such that the sum of the maximum compression amount U1 of the upward dynamic thrust load attenuation elastomer member 423 and the maximum compression amount L1 of the downward dynamic thrust load attenuation elastomer member 424 can be shorter than a length G1 in the up-down direction of one gear part (in an example illustrated in FIG. 1, the rotor gear part 422) out of the rotor gear part 422 and the transmission gear part 441, which is meshed with the rotor gear part 422, the one gear part having a longer length in the up-down direction.

In the straddled vehicle 10 equipped with the EPS, compact arrangement of the EPS actuator 40 is enabled with suppression of a change of a power transmission condition of the EPS actuator 40 transmitting power to the steering shaft 34, the change being otherwise caused by a dynamic thrust load.

In the example illustrated in FIG. 1, the rotor gear part 422 and the transmission gear part 441 are each a gear having spur teeth or helical teeth.

In the example illustrated in FIG. 1, the straddled vehicle 10 equipped with the EPS further includes a front fork 50. The front fork 50 is configured to, when a dynamic thrust load in traveling is received from a road surface, expand and contract in the direction in which the axis line 421C of the rotor shaft 421 extends, so that the dynamic thrust load in traveling received from the road surface is attenuated.

In the example illustrated in FIG. 1, the downward dynamic thrust load attenuation elastomer member 424 has an annular shape, and the downward movement allowance space 426 is formed inside the downward dynamic thrust load attenuation elastomer member 424.

### (Other Embodiments)

The embodiments and variations, of which at least either one of the description or illustration has been given herein, are for ease of understanding the present disclosure, and not for limiting the concept of the present disclosure. The foregoing embodiments and variations may be altered and/or adapted without departing from the spirit of the present disclosure. The spirit encompasses equivalent elements, modifications, omissions, combinations (for example, a combination of features of any embodiment and any variation), adaptations and/or alterations as would be appreciated by those skilled in the art based on the embodiments disclosed herein. The limitations in the Claims are to be broadly interpreted based on the language employed in the Claims and not limited to embodiments and variations described herein or during the prosecution of the present application. The embodiments and variations are to be construed as non-exclusive. For example, in this Description, the terms "preferably," "may," and "possible," are non-exclusive and mean "preferably, but not limited to," "may, but not limited to," and "possibly, but not limited to," respectively.

### Reference Signs List

- 10: straddled vehicle equipped with EPS
- 20: front steerable wheel
- 30: steering mechanism
- 32: handlebar
- 34: steering shaft
- 40: EPS actuator
- 42: motor
- 421: rotor shaft
- 421C: axis line
- 422: rotor gear part
- 423: upward dynamic thrust load attenuation elastomer member
- 424: downward dynamic thrust load attenuation elastomer member
- 425: upward movement allowance space
- 426: downward movement allowance space
- 44: at least one transmission gear part
- 441: one transmission gear part
- 50: front fork

## Claims

1. A straddled vehicle equipped with an EPS, the straddled vehicle equipped with the EPS comprising:
a front steerable wheel;
a steering mechanism including a handlebar and a steering shaft, the handlebar being manipulated by a rider, the steering shaft extending in the up-down direction of the straddled vehicle, the steering mechanism being configured such that a rider's manipulation of the handlebar is mechanically transmitted to steer the front steerable wheel; and
an EPS actuator configured to apply an auxiliary steering force corresponding to a rider's manipulation of the handlebar to the front steerable wheel,
the EPS actuator including
a motor, and
at least one transmission gear part configured to transmit an output of the motor to the steering shaft,
the motor including
a rotor shaft arranged rotatably about an axis line extending in the up-down direction of the straddled vehicle,
a rotor gear part provided to the rotor shaft, the rotor gear part being meshed with one transmission gear part out of the at least one transmission gear part such that a tooth space of the rotor gear part and a tooth space of the one transmission gear part extend in the up-down direction,
an upward dynamic thrust load attenuation elastomer member disposed so as to allow the rotor shaft to move in the upward direction of the straddled vehicle, and to receive and attenuate a dynamic thrust load that is applied in the upward direction, the dynamic thrust load being produced as the straddled vehicle travels, and
a downward dynamic thrust load attenuation elastomer member disposed so as to allow the rotor shaft to move in the downward direction of the straddled vehicle, and to receive and attenuate a dynamic thrust load that is applied in the downward direction, the dynamic thrust load being produced as the straddled vehicle travels,
the motor being configured such that the upward dynamic thrust load attenuation elastomer member is compressed in the upward direction by receiving a dynamic thrust load that is applied in the upward direction of the straddled vehicle, the dynamic thrust load being produced as the straddled vehicle travels, so that the thrust load is attenuated, and also configured such that a maximum compression amount of the upward dynamic thrust load attenuation elastomer member at a time of receiving the thrust load is less than a height of an upward movement allowance space, the upward movement allowance space being provided so as to allow the rotor shaft to move in the upward direction when the thrust load is received,
the motor being configured such that the downward dynamic thrust load attenuation elastomer member is compressed in the downward direction by receiving a dynamic thrust load that is applied in the downward direction of the straddled vehicle, the dynamic thrust load being produced as the straddled vehicle travels, so that the thrust load is attenuated, and also configured such that a maximum compression amount of the downward dynamic thrust load attenuation elastomer member at a time of receiving the thrust load is less than a height of a downward movement allowance space, the downward movement allowance space being provided so as to allow the rotor shaft to move in the downward direction when the thrust load is received,
the motor being configured such that the sum of the maximum compression amount of the upward dynamic thrust load attenuation elastomer member and the maximum compression amount of the downward dynamic thrust load attenuation elastomer member is shorter than a length in the up-down direction of a gear part having a longer length in the up-down direction among both the rotor gear part and the transmission gear part meshed with the rotor gear part.

2. The straddled vehicle equipped with the EPS according to claim 1, wherein
the rotor gear part and the transmission gear part are each a gear having spur teeth or helical teeth.

3. The straddled vehicle equipped with the EPS according to claim 1 or 2, further comprising
a front fork configured to, when a dynamic thrust load in traveling is received from a road surface, expand and contract in a direction in which the axis line of the rotor shaft extends, so that the dynamic thrust load in traveling received from the road surface is attenuated.

4. The straddled vehicle equipped with the EPS according to any one of claims 1 to 3, wherein
the downward dynamic thrust load attenuation elastomer member has an annular shape, and
the downward movement allowance space is formed inside the downward dynamic thrust load attenuation elastomer member.
